# EUROPEAN PATENT APPLICATION

(11) **EP 1 453 050 A2**
(43) Date of publication of application: **01.09.2004**
(21) Application number: 04250422.5
(22) Date of filing: 27.01.2004
(51) Int. Cl.: G11B 20/00

(54) **Access permission based on optically readable marking on optical disc label region**

(30) Priority: 01.03.2003 US 375988
(71) Applicant: Hewlett-Packard Development Company, L.P., Houston, TX 77070 (US)
(72) Inventor: Anderson, Daryl E., Corvalis OR 97333 (US); Valley, Jeffrey M., Corvalis OR 97330 (US)
(74) Representative: Jehan, Robert

(57) **Abstract**

A method (300) is disclosed that optically reads a marking on a label region of an optical disc, to determine access to information stored on a data region of the optical disc (302). Access to the information stored on the data region of the optical disc is then permitted based on the marking on the label region of the optical disc that has been optically read (304).

## Description

The present invention relates to a method of and system for permitting access to stored data.

Intellectual property piracy has become an increasing concern to digital content creators and owners. With the advent of low-cost optical disc drives that enable users to write to optical discs as well as read from them, and with the increasing availability of high-speed Internet connectivity, digitally stored music, videos, and movies, as well as computer programs and other types of information, are more easily illegally exchanged. The illegal exchange of digitally stored music over the Internet, for instance, has already become somewhat prevalent. Hollywood has become concerned that digitally stored movies will become the next subject matter to be similarly exchanged.

The fear of intellectual property piracy has impeded developments to permit the lawful sale, purchase, and exchange of digital content. For instance, music studios are reluctant to allow listeners to pay to download songs from web sites on the Internet, for fear that those songs will then be illegally exchanged. Similarly, the rollout of high-definition (HD) content has been partially impeded because movie studios are worried that their content will be easily pirated, resulting in decreased legitimate sales of the content. These fears pertain both to content that may be obtained electronically, over the Internet, as well as to content that is provided on an optical disc, such as a compact disc (CD) or a digital versatile disc (DVD).

The present invention seeks to provide more secure data.
According to an aspect of the present invention, there is provided a method as specified in claim 1.

A method of one embodiment of the invention optically reads a marking on a label region of an optical disc, to determine access to information stored on a data region of the optical disc. Access to the information stored on the data region of the optical disc is then permitted based on the marking on the label region of the optical disc that has been optically read.

According to another aspect of the present invention, there is provided an optical disc comprising a data region having information stored thereon; and a label region having a marking optically written thereon to govern access to the information stored on the data region.

According to another aspect of the present invention, there is provided an optical disc comprising an optically writable label region; and means on the optically writable label region for governing access to information.

According to another aspect of the present invention, there is provided a method comprising storing information on a data region of an optical disc; conveying the optical disc to a user; and optically writing a marking on a label region of the optical disc that governs access to the information by the user.

Embodiments of the present invention are described below, by way of example only, with reference to the accompanying drawings in which:
FIG. 1 is a diagram of an optical disc having a label side and a data side, according to an embodiment of the invention.
FIG. 2 is a diagram of an optical disc having a label region and a data region on the same side, according to an embodiment of the invention.
FIG. 3 is a flowchart of a method of use, according to an embodiment of the invention.
FIG. 4 is a flowchart of a method of business and/or manufacture, according to an embodiment of the invention.
FIG. 5 is a diagram of a system in accordance with which at least some embodiments of the invention may be implemented.
FIG. 6 is a diagram showing how the system of FIG. 5 can be internally adapted to a computer.
FIG. 7 is a diagram showing how the system of FIG. 5 can be externally adapted to a computer.

In the following detailed description of exemplary embodiments of the invention, reference is made to the accompanying drawings that form a part hereof, and in which is shown by way of illustration specific exemplary embodiments in which the invention may be practiced. These embodiments are described in sufficient detail to enable those skilled in the art to practice the invention. Other embodiments may be utilized, and logical, mechanical, and other changes may be made without departing from the scope of the claims. The following detailed description is, therefore, not to be taken in a limiting sense.

### Preferred Optical Disc

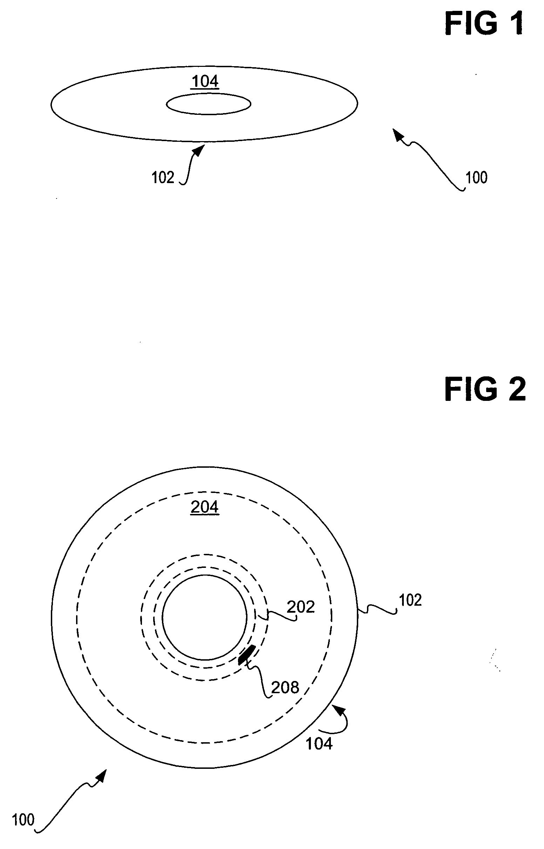

FIG. 1 shows an optical disc 100 according to an embodiment of the invention. The optical disc 100 includes a data side 102, which is the bottom of the disc 100 as shown in FIG. 1, and a label side 104, which is the top of the disc 100 as shown in FIG. 1. Information is digitally storable on the data side 102. For instance, the disc 100 may be a CD, a CD-ROM, a CD-R, a CD-RW, a DVD, a DVD-ROM, a DVD-R, a DVD-RW, a DVD+RW, a DVD-R/W, or another type of optical disc that allows for the storing of information on the data side 102 of the disc 100. Information is digitally stored on the data side 102 in a machine-readable manner that is typically not human readable. The information may include multimedia content, such as music, videos, movies, and so on, data, computer programs, and/or other types of information.

By comparison, the label side 104 of the optical disc 100 is not typically used for storing information digitally, but rather may be used for affixing a label thereon, writing thereon with a marker or other writing implement, screen printing thereon with a specialized image-forming device or other device, or otherwise labeling the disc 100. The term labeling as used herein encompasses all of these and other manners by which the disc 100 can be labeled. Users are thus easily able to determine the information stored on the data side 102 of the disc 100, without having to insert the disc 100 into an optical disc drive communicatively coupled to a computing device, or into another type of computing device peripheral. The label side 104 may be pre-labeled, where the manufacturer or retailer labels the disc 100 before user purchase and utilization, or the label side 104 may be labeled by the user him or herself.

The data side 102 of the optical disc 100, the label side 104 of the optical disc 100, or both the data side 102 and the label side 104 of the optical disc 100, can include a marking surface on which a marking may be optically writable in a human-readable and/or machine-readable manner. Such optical writing may be accomplished as described in the commonly assigned US patent application entitled "Integrated CD/DVD Recording and Label", filed on October 11, 2001, and assigned serial number 09/976,877. The optical writing may be rewritable, overwritable, and/or erasable.

The optical writing may be rewritable in that once such a marking is written on the marking surface, another marking may be written on the same area of the marking surface without any vestiges of the earlier marking remaining. The writing may be overwritable in that once such a marking is written on the marking surface, another marking may be written over the earlier marking, where vestiges of the earlier marking may remain. The writing may finally be erasable in that once such a marking is written on the marking surface, it may be erased, at least substantially eliminating any vestiges of the marking.

The optical writing on the marking surface may be distinguished from the digitally stored information on the data side 102 in that the writing is typically, but not necessarily, human readable, and optionally may also be machine readable. The optical writing on the marking surface may be distinguished from labeling on the label side 104 in that it is accomplished by a laser that integrally changes the make-up of the disc 100 itself, as opposed to only applying a label on the label side 104, writing on the label side 104, printing on the label side 104, and so on. Other distinctions between the optical writing and the digitally stored information on the data side 102 and/or the labeling on the label side 104, in lieu of or in addition to the distinctions described herein, may also be encompassed by embodiments of the invention.

The label side 104 of the optical disc 100 is more generally a label region of the disc 100, and the data side 102 of the optical disc 100 is more generally a data region of the disc 100. The label and data regions may, therefore, coexist on the same side of the optical disc 100. For instance, the optical disc 100 may have the label side 104 and the data side 102, where the data side 102 further includes a portion on which a marking may be optically written. That is, the label region of the optical disc 100 may include the label side 104, and a portion of the other side of the optical disc 100 that may be optically written.

FIG. 2 shows an example of the optical disc 100 in which there is a label region 202 and a data region 204, on the side 102 of the optical disc 100, according to an embodiment of the invention. The label region 202 is depicted in FIG. 2 as being on the inside diameter of the optical disc 100. The label region 202 may have optically writable markings thereon for label purposes, whereas the data region 204 may have optically writable information stored thereon. As has been indicated, however, the label region 202 may be on the other side 104 of the optical disc 100, opposite to the side 102. The label region 202 specifically includes an optically writable marking 208, which may be a bar code, or another type of optically writable marking. Alternatively, the optically writable marking 208 may be less explicitly discernible. For instance, the marking 208 may be interleaved into an image on the label region 202, such that the marking 208 is effectively a digital watermark hidden within the image.

The marking 208 specifically governs access to the information stored on the data region 204. A device, such as a computer, an audio/video (AV) component, and so on, does not permit access to the information stored on the data region 204 until it has retrieved the marking 208 to determine the access to the information that is permitted. If the user does not have the optical disc 100 having the label region 202 on which the marking 208 is optically written, then the user will not be able to access the information. The marking 208 is read by the computer or other device before permitting access to the information stored on the data region 204, such as before playing the information, where the information is music or a movie, for instance, or before installing the information, where the information is a computer program, for instance.

The marking 208 may represent an encryption key for the information stored on the data region 204. For a computer to be able to decrypt the information retrieved from the data region 204, it optically detects and decodes the encryption key from the label region 202, and uses encryption key to decrypt the information. Thus, if a user has a copy of the information stored on the data region 204, but does not have access to the optical disc 100 that includes the label region 202, the user will not be able to decrypt and hence will not be able to utilize the information. Having the encryption key optically written on the label region 202 as the marking 208 eliminates the need for the user to have to manually enter the encryption key.

Furthermore, the user is unable to simply provide the encryption key to other users. The user may not be able to discern the actual key that the marking 208 represents, where the marking 208 is a bar code or other type of indicia. Even where the actual key is optically written in an easily human-understood manner, such as via alphanumeric characters, the user may still not be able to provide the encryption key for use by other users. This is because the encryption key may only be enterable by being optically read with an optical disc device, and not physically entered on a keyboard or other input device by the user, such that physical access to the disc 100 is needed.

Furthermore, the encryption key may expire after a length of time, such that the user may have to periodically retrieve a new key to be optically written on the label region 202, such as by paying for and downloading the new key over the Internet. Alternatively, the user may have to receive a new optical disc 100 that has the new key written thereon as the optically writable marking 208. Such an embodiment of the invention provides for enhanced security. Even where the encryption key is successfully cracked by hackers, the cracked key is of limited value, because it expires and a new key required at some point in the future.

The optically writable marking 208 on the label region 202 may also represent the number of times the information stored on the data region 204 is accessible by the user. For instance, the user may be able to play the multimedia content recorded on the data region 204 only one or two times. After each time the content is played, the marking 208 may be modified or partially erased to decrement the number of times the user may further access the information. As a simple example, if the information on the data region 204 is accessible twice, half of the marking 208 may be erased the first time the information is accessed, and the other half of the marking 208 may be erased the second time the information is accessed. Once the marking 208 has been completely erased, access to the information on the data region 204 may no longer be allowed. The marking 208 in this embodiment thus allows the user to purchase access to the information on a pay-per-use basis.

As a more sophisticated example, the marking 208 may represent a codification of the number of times the user is able to access the information stored on the data region 204. Each time the user accesses the information, the marking 208 may be modified, such as overwritten, erased and then rewritten, and so on, to change the remaining number of times the user is able to access the information. Alternatively, the absence of the marking 208 may indicate that the user is able to access the information. Once the information has been accessed one time, the marking 208 is then optically written to indicate that the user is not able to access the information further.

The optically writable marking 208 on the label region 202 may also indicate an expiration date after which the information stored on the data region 204 is no longer accessible, and/or a length or period of time during which the information stored on the data region 204 is accessible. A user may be able to access the information for only two or three days, for instance, or access to the information may expire after a set length of time after the user has paid for access to the information. This in effect allows the user to rent the information stored on the data region 204, without having to return the optical disc 100 after the rental period.

The optically writable marking 208 on the label region 202 may also represent which parts of the information stored on the data region 204 is accessible by the user. For instance, the information stored on the data region 204 may be a complete album of songs. The user may receive the optical disc 100 for free, or after paying a nominal amount of money. The optically writable marking 208 may enable the user to only access and listen to one or two of the songs stored on the data region 204. After paying an additional sum of money, the user may be able to modify the marking 208, such as by receiving a computer program or an updated marking over the Internet, which enables the user to access the remaining songs stored on the data region 204.

As another example, the information stored on the data region 204 may be a complete office suite of application programs, including a word processor, a spreadsheet program, a personal information manager (PIM), a database program, and so on. The user may initially have paid for, and thus have received access to, only the word processor, such that the optically writable marking 208 correspondingly permits such access. If the user later subsequently decides to also purchase the spreadsheet program, he or she only has to pay for and download a small computer program or an updated marking over the Internet, rather than having to download the entire spreadsheet program. In this embodiment, the user is thus able to pay for and access only those parts of the information stored on the data region 204 that he or she wants, and is able to pay for and access other parts of the information on an as-needed basis.

### Preferred Methods

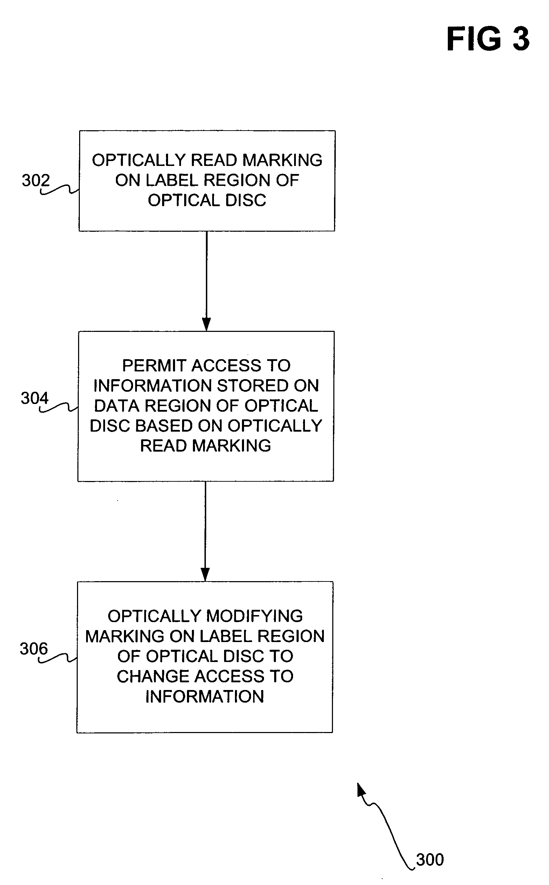

FIG. 3 shows a method of use 300, according to an embodiment of the invention. The method 300 is preferably performed by a device, such as a computer or an audio/video (AV) component, which includes or is connected to an optical disc device. The optical disc device is at least able to optically read markings optically written on the label regions of optical discs, and preferably is also able to optically write such markings. Optical writing can include first-time optical writing of such markings, subsequent optical rewriting of such markings, erasure of such markings, and so on. The method 300 may be implemented as computer-executable instructions, such as one or more computer programs, stored on a computer-readable medium. The medium may be a volatile or a non-volatile medium, a magnetic, optical, and/or solid-state medium, a fixed or a removable medium, and so on.

An optically written marking on the label region of an optical disc is optically read to determine access to information stored on the data region of the optical disc (302). The optically written marking may be a human-discernible or human-indiscernible marking. The marking may be a bar code, or another type of marking. The marking may be integrated within an image on the label region in a hidden manner. In one embodiment, reading the optically written marking is inclusive of determining whether the marking is in fact present on the label region of the optical disc, such that access to the information stored on the data region is permitted or denied when the marking is absent.

As has been described, the marking can govern access to the information stored on the data region of the optical disc in a number of different ways. The marking may represent an encryption key used to decrypt the information stored on the data region of the optical disc. The marking may represent the number of times the information stored on the data region can be accessed. The marking may represent an expiration date after which the information no longer can be accessed, or a length of time during which the information can be accessed. The marking may also represent the portion of information stored on the data region that can be accessed.

Access to the information stored on the data region is then permitted, based on the marking on the label region of the optical disc that has been optically read (304). The user may be requested to turn the disk over if the label region of the optical disc is on a different side than the data region of the optical disc. Finally, the marking on the label region of the optical disc is preferably optically modified, to change or modify the permitted access to the information (306). Such optical modification includes writing a marking where there was no marking before. Optical modification also includes adding an additional part to the marking to result in a modified version thereof, overwriting the marking, rewriting the marking without prior erasure, rewriting the marking after erasure, and so on. Effective erasure of the marking may be accomplished by optically overwriting the marking, such that optically rewriting a modified version of the marking can be subsequently accomplished.

For instance, where the marking represents an encryption key, the marking may be periodically updated if the expiration key expires. Where the marking represents the number of times the user is able to access the information stored on the data region, the marking may be modified to reflect the fact that the user has used up one of his or her accesses, such that the number of times the user can access the information is decreased by one time. Where the marking represents the parts of the information stored on the data region that the user is able to access, the marking may be updated to change which parts of the information are accessible. Where the lack of a marking indicates that the user is able to access the information, a marking may be added to indicate that the user is no longer able to access the information. Similarly, where the presence of a marking indicates that the user is able to access the information, the marking may be removed to indicate that the user is no longer able to access the information. The marking may be modified also to maintain user access to the information.

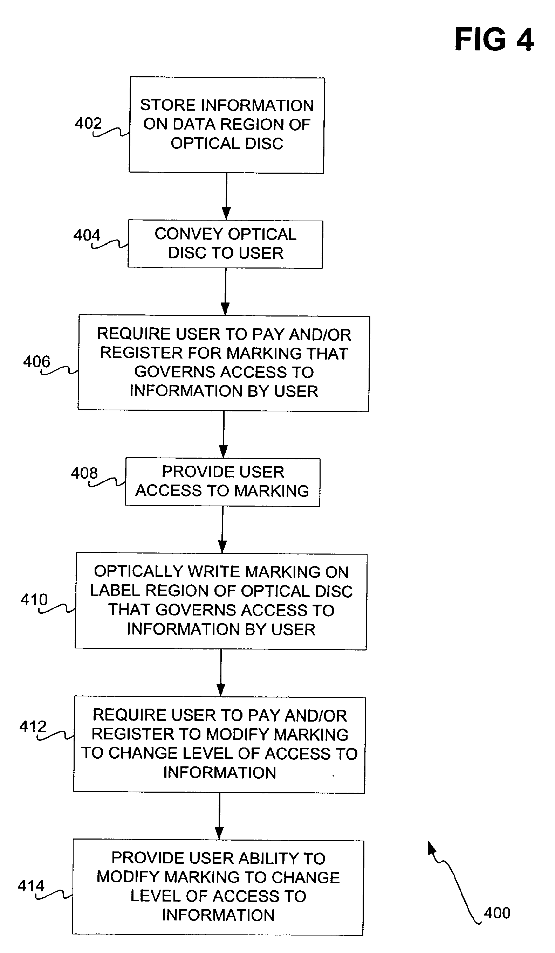

FIG. 4 shows a method 400 of manufacture and of business, according to an embodiment of the invention. At least some parts of the method 400 is preferably performed by a content owner or distributor that wishes to have users pay and/or register for access to information that is storable on the data regions of optical discs. Furthermore, the order of the parts of the method 400 depicted in FIG. 4 can be varied. As a specific example, 410, optically writing a marking on the label region of the optical disc, may be performed before 404, conveying the optical disc to the user. That is, 410 may be performed between 402 and 404, between 406 and 408, or between 412 and 414 in an embodiment of the invention, rather than between 408 and 412 as specifically depicted in FIG. 4.

Information is initially stored on the data region of an optical disc (402). The information may be multimedia information, such as music, videos, movies, and so on. The information may also be computer programs, or other types of information. The optical disc is conveyed to the user (404). The user may receive the optical disc for free, after paying a nominal amount of money, and so on. If 410 has not yet been performed, then preferably the information is not accessible by the user until a marking has been optically written to the label region of the optical disc. Alternatively, 410 may be performed prior to conveyance of the disc to the user, so that an initial level of access to the information by the user has been established.

The user may be requested to pay for and/or register to obtain access to the information (406). For instance, the user may be able to obtain a marking representing partial access to the information, such as access to only part of the information, access for one time, or access for a limited period of time, and so on, in exchange for providing his or her registration information. The user may be able to receive access to the disc that is commensurate with the extent to which registration information is provided. For example, more or better access may be provided to the information where the user has provided more information on him or herself. Thus, different users may have different initial levels of access to the information. Similarly, the user may be able to receive more or better access to the information depending on the amount of money paid for the access. Paying a higher price may yield the user with access to more of the information, and/or with longer access to the information, and so on.

In exchange, the user is provided a marking that represents this level of information (408). The user may be provided the marking through a download over the Internet. Alternatively, the user may take the optical disc to a retailer that has the marking. The marking is optically written on the label region, where the marking governs access to the information by the user (410). Where the user has downloaded the marking from over the Internet, the user uses his or her optical disc device to optically write the marking on the label region of the optical disc. Where the user has brought the optical disc to a retailer, the retailer's optical disc device is used to optically write the marking on the label region of the disc. The user is then able to access the information stored on the optical disc based on the level of access afforded by the marking. Thus, the marking on the label region of the disc may vary based on the level of access that it provides to the information stored on the data region of the disc.

The user may be required to pay and/or register to modify the marking to change the level of access to the information (412). For example, the user may have only been able to access the information one or two times, or may have only been able to access a portion of the information. This is likely to be the case especially where the marking was optically written to the label region of the optical disc prior to the optical disc being conveyed to the user, and the user receives the optical disc free of charge, or for a nominal amount of money. The user may subsequently have to register and/or pay additional money in order to obtain more or better access to the information.

Once the user has paid and/or registered, the user is provided with the ability to modify the marking to change the level of access afforded to the information (414). The user may be able to download a new marking to be optically written on the label region of the optical disc. The user may also be able to download instructions and/or a small computer program for optically modifying the existing marking on the label region, to change the permitted access to the information. Alternatively, the user may have to send in the optical disc to the manufacturer or distributor, or take the optical disc to a local retailer, for the marking to be optically modified.

### Representative Systems and Computing Devices

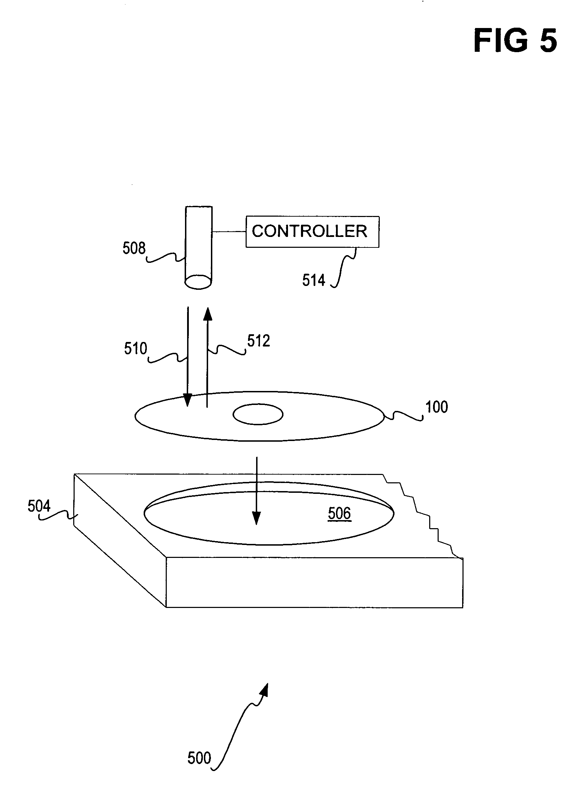

FIG. 5 shows a system 500 in accordance with which embodiments of the invention may be implemented. The system 500 includes a mechanism 504 having a seat 506 in which the optical disc 100 can rotatably rest. The mechanism 504 is generally receptive to the optical disc 100, and may include motors and other components not shown in FIG. 5. The mechanism 504 is depicted in FIG. 5 as a tray, but may also be such that the optical disc 100 is fed or inserted directly thereinto, instead of being placed on a tray.

The system 500 also includes a laser 508. The laser 508 emits signals 510 and senses signals 512 reflected by the optical disc 100 as the disc rotates in the mechanism 504. The laser 508 thus is for helically, or by raster, reading information from and/or helically, or by raster, writing information to the optical disc 100. The laser 508, or another laser, may also be for helically, or by raster, reading markings and/or helically, or by raster, writing markings to the optical disc 100. The system 500 further includes a controller 514. The controller 514 may be software, hardware, or a combination of software and hardware. The controller 514 controls the laser 508.

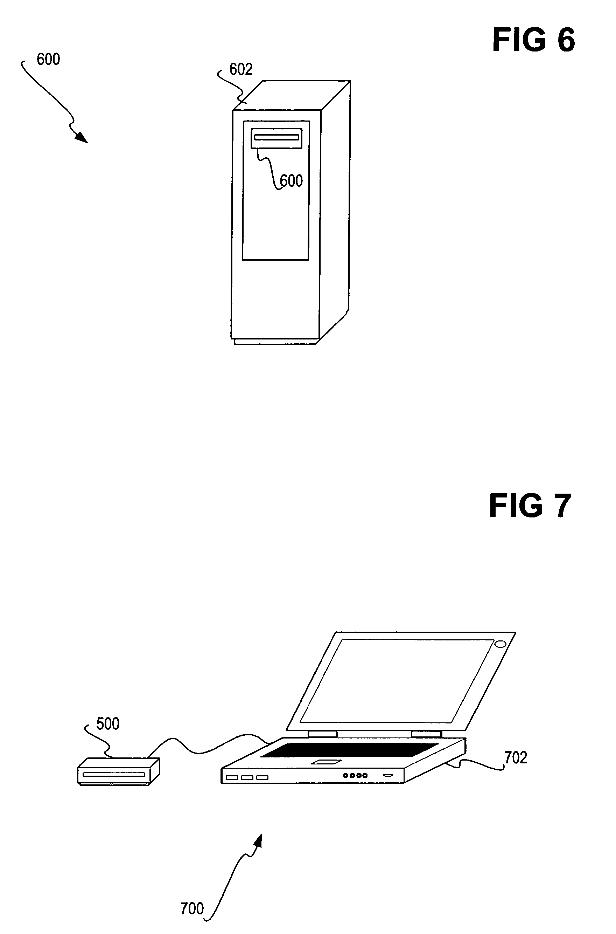

The system 500 may be part of a computer, such as a desktop or laptop computer. The system 500 may also be encased in an enclosure internally or externally connectable to a computer. FIG. 6 shows a system 600 according to an embodiment of the invention that includes a desktop tower computer 602 in which the system 500 is encased in an enclosure that has been internally connected to the computer 602. By comparison, FIG. 7 shows a system 700 according to an embodiment of the invention that includes a laptop computer 702 in which the system 500 is enclosed in an enclosure that has been externally connected to the computer 702. Whereas the computer 702 is depicted in FIG. 7 as a laptop computer, it may also be a desktop computer, or another type of computer. 5 10 15

It is noted that, although specific embodiments have been illustrated and described herein, it will be appreciated by those of ordinary skill in the art that any arrangement that is calculated to achieve the same purpose may be substituted for the specific embodiments shown. Other applications and uses of embodiments of the invention, besides those described herein, are amenable to at least some embodiments. This application is intended to cover any adaptations or variations of the present invention. Therefore, it is manifestly intended that this invention be limited only by the claims and equivalents thereof.

The disclosures in United States patent application no. 10/375,988, from which this application claims priority, and in the abstract accompanying this application are incorporated herein by reference.

## Claims

1. A method (300) including the steps of:
optically reading a marking on a label region of an optical disc to determine access to information stored on a data region of the optical disc (302); and,
permitting access to the information stored on the data region of the optical disc based on the marking optically read on the label region of the optical disc (304).

2. A method as in claim 1, wherein optically reading the marking on the label region comprises optically reading a marking on the label region representing an encryption key for the information stored on the data region of the optical disc.

3. A method as in claim 1 or 2, wherein optically reading the marking on the label region comprises optically reading a marking on the label region representing a length of time the information stored on the data region of the optical disc is accessible.

4. A method as in claim 1, 2 or 3, wherein optically reading the marking on the label region comprises optically reading a marking on the label region representing an expiration date after which the information stored on the data region of the optical disc is inaccessible.

5. A method as in any preceding claim, wherein optically reading the marking on the label region comprises optically reading a marking on the label region representing a number of times the information stored on the data region of the optical disc is accessible.

6. A method as in any preceding claim, wherein optically reading the marking on the label region comprises optically reading a marking on the label region indicating which parts of the information stored on the data region of the optical disc that are accessible.

7. A method as in any preceding claim, wherein optically reading the marking on the label region comprises determining whether the marking is present on the label region of the optical disc, such that access to the information stored on the data region of the optical disc is permitted when the marking is absent.

8. A method as in any preceding claim, further comprising optically overwriting the marking on the label region of the optical disc to effectively erase the marking, to prevent further access to the information stored on the data region of the optical disc (306).

9. A method as in any preceding claim, further comprising optically modifying the marking on the label region of the optical disc to modify access to the information stored on the data region of the optical disc (306).

10. A method as in any preceding claim, including optically modifying the marking on the label region of the optical disc to maintain access to the information stored on the data region of the optical disc (306).
